# EUROPÄISCHE PATENTSCHRIFT

(11) **EP 2 995 533 B1**
(45) Veröffentlichungstag und Bekanntmachung des Hinweises auf die Patenterteilung: **06.12.2017**
(21) Anmeldenummer: 15184375.2
(22) Anmeldetag: 09.09.2015
(51) Int. Cl.: B62D 11/18, B62D 11/10, B62D 55/02

(54) **LENKBARES RAUPENFAHRWERK**
STEERABLE TRACK ASSEMBLY
CHENILLE ORIENTABLE

(30) Priorität: 10.09.2014 DE 102014113028
(43) Veröffentlichungstag der Anmeldung: 16.03.2016
(73) Patentinhaber: CLAAS Industrietechnik GmbH, 33106 Paderborn (DE)
(72) Erfinder: Claas, Helmut, Dr., 33428 Harsewinkel (DE); Dückingaus, Heinrich, 33649 Bielefeld (DE); Obermeier-Hartmann, Robert, 33142 Büren (DE); Schulze Zumkley, Hendril, 33397 Rietberg (DE)
(74) Vertreter: Budach, Steffen

(56) Entgegenhaltungen:
- EP-A1- 2 113 446
- US-A1- 2013 154 345

## Beschreibung

Die Erfindung betrifft ein lenkbares Raupenfahrwerk gemäß dem Oberbegriff des Anspruchs 1.

Landwirtschaftliche Nutzfahrzeuge, insbesondere Traktoren oder selbstfahrende Erntemaschinen, beispielsweise Mähdrescher oder Feldhäcksler, werden in zunehmendem Maße mit Raupenfahrwerken ausgestattet. Die Auflagekräfte des Fahrzeugs lassen sich dadurch auf eine größere Aufstandsfläche verteilt, was zu einer geringeren Belastung des vom Fahrzeug befahrenen Feldbodens führt.

Aufgrund der bei einem Raupenfahrwerk bestehenden großen Aufstandsfläche und der damit einhergehenden günstigen Traktionsverhältnisse bietet es sich an, über das Raupenfahrwerk auch Antriebskräfte zu übertragen. Daher sind bei aus dem Stand der Technik bekannten Raupenfahrwerken landwirtschaftlicher Nutzfahrzeuge die zugehörigen Raupenschiffe zumeist angetrieben. Der Antriebsstrang eines solchen Raupenfahrwerks kann ein Differentialgetriebe umfassen, dessen Getriebeeingang über einen Motor antreibbar ist und dessen beiden Getriebeausgänge ein linksseitiges Raupenschiff und ein rechtsseitiges Raupenschiff antreiben.

Ein aus der nachveröffentlichten deutschen Patentanmeldung 10 2014 104 549.1 bekanntes Raupenfahrwerk ist darüber hinaus lenkbar ausgeführt. Zur Verwirklichung der Lenkfunktion sind die Getriebeausgänge des Differentialgetriebes, welche jeweils eines der Raupenschiffe antreiben, über ein überlagertes hydrostatisches Getriebe aneinander gekoppelt. Durch Verändern der Übersetzung des hydrostatischen Getriebes mittels einer Veränderung des Schluck- bzw. Fördervolumens einer oder beider hydrostatischen Einheiten lässt sich das Verhältnis der Drehzahlen der Getriebeausgänge - somit das Verhältnis der Geschwindigkeiten der Raupenschiffe - beeinflussen, so dass mit verhältnismäßig geringem Aufwand eine Differentiallenkung für das Raupenfahrwerk geschaffen ist.

Gegenüber lenkbaren Raupenfahrwerken, deren Lenkfunktion einfach durch individuelles Abbremsen des jeweils kurveninneren Raupenschiffs erfolgt, besteht bei der in der deutschen Patentanmeldung 10 2014 104 549.1 beschriebenen hydraulischen Überlagerungslenkung der Vorteil, dass das Lenken weder Bremsverschleiß noch damit verbundene Verlustleistungen verursacht. Zudem lässt sich durch die hydraulische Ansteuerung eine besonders feinfühlige Lenkbarkeit erreichen.

Für schwere landwirtschaftliche Nutzfahrzeuge mit einem solchen lenkbaren Raupenfahrwerk zeigt sich jedoch, dass die hydrostatischen Einheiten des hydraulischen Getriebes einerseits verhältnismäßig groß ausgelegt sein müssen, um schon bei geringen Drehzahlen ein ausreichendes Drehmoment zu erzeugen. Um mit diesen Fahrzeugen andererseits mit größerer Geschwindigkeit beispielsweise auf der Straße fahren zu können, müssen die hydrostatischen Einheiten aber auch verhältnismäßig schnell drehen können. Diese beiden Anforderungen - hohes Drehmoment und hohe Drehzahl - schließen sich jedoch gegenseitig weitgehend aus. Jedenfalls hätte eine hydrostatische Einheit, welche die Anforderungen im praktisch erforderlichen Maße erfüllen würde, baulich nicht akzeptable Ausmaße.

Weiterhin offenbart die europäische Patentanmeldung EP 2 113 446 A1 den Oberbegriff des unabhängigen Anspruchs und die amerikanische Patentanmeldung US2013/0154345 A1 ein landwirtschaftliches Nutzfahrzeug in Halbraupenbauweise mit einer lenkbaren weiteren Achse.

Vor diesem Hintergrund ist es eine Aufgabe der vorliegenden Erfindung, ein lenkbares Raupenfahrwerk der genannten Art in kompakter Bauweise anzugeben, das sich sowohl für verhältnismäßig geringe Geschwindigkeiten - wie insbesondere bei Feldfahrt - als auch für verhältnismäßig hohe Geschwindigkeiten - wie insbesondere bei Straßenfahrt - einsetzen lässt.

Die Aufgabe wird gelöst durch ein lenkbares Raupenfahrwerk mit den Merkmalen des Anspruchs 1. Dieses zeichnet sich aus durch Mittel zum Entkoppeln der Getriebeausgänge vom hydraulischen Getriebe. Erfindungsgemäß wurde demnach zunächst gesehen, dass die durch ein überlagertes hydraulisches Getriebe geschaffene Differentiallenkung bereits zuvor genannte Vorteile wie einen geringen Verschleiß, verringerte Verlustleistung sowie eine hohe Feinfühligkeit bietet. Zur Beibehaltung dieser Vorteile und damit das Raupenfahrwerk bei kompakter Bauweise auch für höhere Fahrgeschwindigkeiten einsetzbar ist, wurde es erfindungsgemäß als vorteilhaft erachtet, die Getriebeausgänge des Differentialgetriebes vom hydraulischen Getriebe entkoppeln zu können. Durch Mittel zum Entkoppeln der Getriebeausgänge vom hydraulischen Getriebe ist es möglich, die Kopplung der Antriebe der Raupenschiffe über das hydraulische Getriebe bedarfsweise aufzuheben. Erfolgt dies beispielsweise bei Überschreiten einer bestimmten Fahrgeschwindigkeit und/oder Drehzahl, so kann vermieden werden, dass das hydraulische Getriebe mit einer übermäßigen Geschwindigkeit (Drehzahl) betrieben wird. Auf vorteilhafte Weise kann das hydraulische Getriebe somit für niedrigere Drehzahlen ausgelegt werden.

Die erfindungsgemäß vorgesehenen Mittel zum Entkoppeln der Getriebeausgänge vom hydraulischen Getriebe können unterschiedlich geartet sein. Eine bevorzugte Weiterbildung des Raupenfahrwerks sieht vor, dass zwischen dem ersten Getriebeausgang und einem ersten Glied des hydraulischen Getriebes eine erste Kupplung, und dass zwischen dem zweiten Getriebeausgang und einem zweiten Glied des hydraulischen Getriebes eine zweite Kupplung angeordnet ist. Die Entkopplung erfolgt somit mechanisch durch jeweiliges Öffnen der Kupplungen.

Dabei sind die Kupplungen vorteilhaft jeweils als Reibkupplung ausgeführt, um ein Angleichen unterschiedlicher Drehzahlen zu ermöglichen.

Das hydraulische Getriebe kann unterschiedlicher Art sein. Bevorzugt umfasst dieses zumindest eine mit dem ersten Getriebeausgang in Antriebsverbindung bringbare erste hydrostatische Einheit und eine mit dem zweiten Getriebeausgang in Antriebsverbindung bringbare zweite hydrostatische Einheit, wobei die hydrostatischen Einheiten innerhalb eines hydraulischen Kreises miteinander verbunden sind. Mit dem hydraulischen Getriebe lässt sich somit zwischen dem ersten und dem zweiten Getriebeausgang ein Drehzahlverhältnis vorgeben.

Indem bevorzugt zumindest eine, vorzugsweise beide, der hydrostatischen Einheiten ein veränderliches Schluck- bzw. Fördervolumen aufweisen, lässt sich dieses Drehzahlverhältnis verändern.

Zur Erzielung verhältnismäßig hoher Antriebsmomente an den Raupenschiffen sind vorteilhaft die hydrostatischen Einheiten jeweils über eine Stirnradstufe mit dem zugehörigen Getriebeausgang in Antriebsverbindung bringbar. Die hydrostatischen Einheiten können in diesem Fall verhältnismäßig klein ausgeführt sein.

Eine einfache Bauform sieht dabei vor, dass eine Stirnradstufe jeweils ein der hydrostatischen Einheit zugeordnetes Stirnrad und ein damit kämmendes, dem Getriebeausgang zugeordnetes Stirnrad umfasst.

Bevorzugt ist dem Stirnrad, das dem Getriebeausgang zugeordnet ist, jeweils eine Kupplung zugeordnet, mit der sich zwischen jeweiligem Stirnrad und Getriebeausgang eine Antriebsverbindung lösen oder herstellen lässt.

Damit ein Betrieb mit zu hoher Drehzahl der hydrostatischen Einheiten sicher vermieden wird, sieht eine vorteilhafte Weiterbildung des Raupenfahrwerks eine Steuereinrichtung vor, die betreibbar ist, die Getriebeausgänge vom hydraulischen Getriebe in Abhängigkeit eines Betriebsparameters, insbesondere der Fahrgeschwindigkeit des Raupenfahrwerks, einer Drehzahl des Getriebeeingangs, einer Drehzahl eines Getriebeausgangs, einer Drehzahl einer hydrostatischen Einheit oder dergleichen, zu entkoppeln.

Vorteilhafterweise kann dabei vorgesehen sein, dass die Steuereinrichtung betreibbar ist, die Kupplungen durch entsprechende Ansteuerung gemeinsam zu betätigen.

Eine vorteilhafte Weitbildung des Raupenfahrwerks sieht vor, dass sich dieses in zwei Betriebsmodi betreiben lässt, wobei in einem gekoppelten Betriebsmodus die Getriebeausgänge des Differentialgetriebes über das hydraulische Getriebe aneinander gekoppelt sind, so dass sich das Raupenfahrwerk durch Verändern der Übersetzung des hydraulischen Getriebes und eine damit einhergehende Änderung des Verhältnisses der Antriebsdrehzahlen der Raupenschiffe lenken lässt, und wobei in einem entkoppelten Betriebsmodus die Getriebeausgänge des Differentialgetriebes vom hydraulischen Getriebe entkoppelt sind, so dass sich in einem erzwungenen Fahrzustand des Raupenfahrwerks, insbesondere bei erzwungener Kurvenfahrt, das Verhältnis der Drehzahlen der Getriebeausgänge an diesen Fahrzustand anpassen kann.

Vorzugsweise ist die Steuereinrichtung betreibbar, den Betriebsmodus des Raupenfahrwerks in Abhängigkeit eines oder mehrerer Betriebsparameter auszuwählen, insbesondere in Abhängigkeit der Fahrgeschwindigkeit des Raupenfahrwerks, einer Drehzahl des Getriebeeingangs, einer Drehzahl eines Getriebeausgangs, einer Drehzahl einer hydrostatischen Einheit und/oder dergleichen.

Dabei kann vorteilhaft für unterhalb eines vorgebbaren Wertes liegende Fahrgeschwindigkeiten und/oder Drehzahlen der gekoppelte Betriebsmodus ausgewählt werden und kann für oberhalb des vorgebbaren Wertes liegende Fahrgeschwindigkeiten und/oder Drehzahlen der entkoppelte Betriebsmodus ausgewählt werden.

In einer besonders vorteilhaften Ausgestaltung der Erfindung ist der hydraulische Kreis mit einer, insbesondere antriebsmotorgetriebenen, Hydraulikpumpe verbindbar. Mittels der antriebsmotorgetriebenen Hydraulikpumpe, welche nur bedarfsweise dem hydraulischen Kreis zugeschaltbar ist, kann der hydraulische Kreis mit zusätzlicher Leistung versorgt werden. Durch Ausschwenken der hydrostatischen Einheiten um den gleichen Betrag, beispielsweise jeweils einen Vollausschlag, in entgegengesetzter Richtung wird eine Lenkbewegung um eine Hochachse des Raupenfahrwerks ermöglicht. Die hydrostatischen Einheiten können dabei um den gleichen Betrag und in entgegengesetzter Richtung ausschwenken, da eine Bewegung des stehenden Differentialkorbes bei Fahrzeugstillstand nicht möglich ist. Die Verbindung des hydraulischen Kreises mit der Hydraulikpumpe hat den Vorteil, dass dadurch auch bei Fahrzeugstillstand eine Lenkbewegung im Stand erfolgen kann, da die Bereitstellung von Energie für die Überlagerungslenkung nicht nur in Abhängigkeit der Drehzahl des Differentials erfolgt sondern auch über den Hydraulikstrom der Hydraulikpumpe. Bei langsamer Fahrt ist es möglich, einen zusätzlichen Volumenstrom und damit hydraulische Energie in die Überlagerungslenkung fördern. Bei langsamer Fahrt können zudem die Hydrostaten stärker ausgelenkt werden und erzeugen damit ein größeres Moment. Ausreichende Drehzahlen können durch den zusätzlichen Ölstrom der Hydraulikpumpe erzeugt werden. Hierdurch können die Hydrostaten beispielsweise kleiner dimensioniert werden.

Die Erfindung betrifft weiterhin ein landwirtschaftliches Nutzfahrzeug, insbesondere einen Traktor oder eine selbstfahrende Erntemaschine in Halbraupenbauweise, mit einer Fahrzeugstruktur, die sich mittels eines Raupenfahrwerks gemäß einem der vorigen Ansprüche und mittels einer weiteren Achse gegenüber dem Boden abstützt, wobei die weitere Achse lenkbar ausgeführt ist, so dass sich das Nutzfahrzeug zumindest im entkoppelten Betriebsmodus des Raupenfahrwerks über die weitere Achse lenken lässt.

Die Erfindung wird nachfolgend anhand einer beigefügten Zeichnung näher erläutert. Darin zeigt:
- Fig. 1: ein landwirtschaftliches Nutzfahrzeug in Form eines Mähdreschers in perspektivischer Ansicht;
- Fig. 2: eine Prinzipskizze eines lenkbaren Raupenfahrwerks; und
- Fig. 3: eine Prinzipskizze eines lenkbaren Raupenlaufwerkes, dessen hydraulischer Kreislauf mit einer Hydraulikpumpe verbindbar ist.

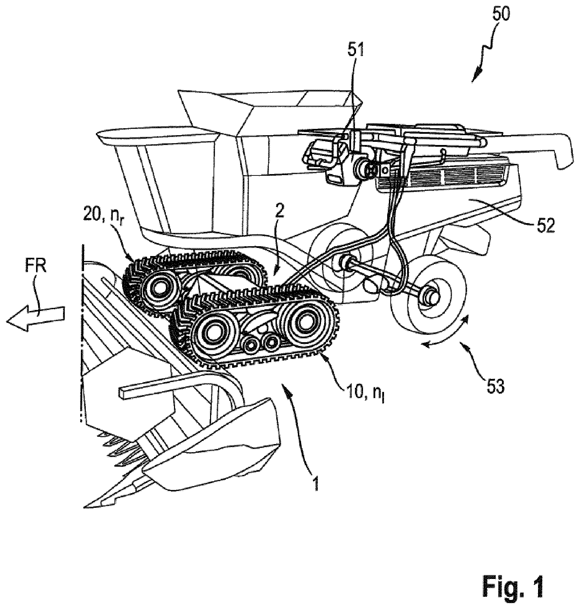

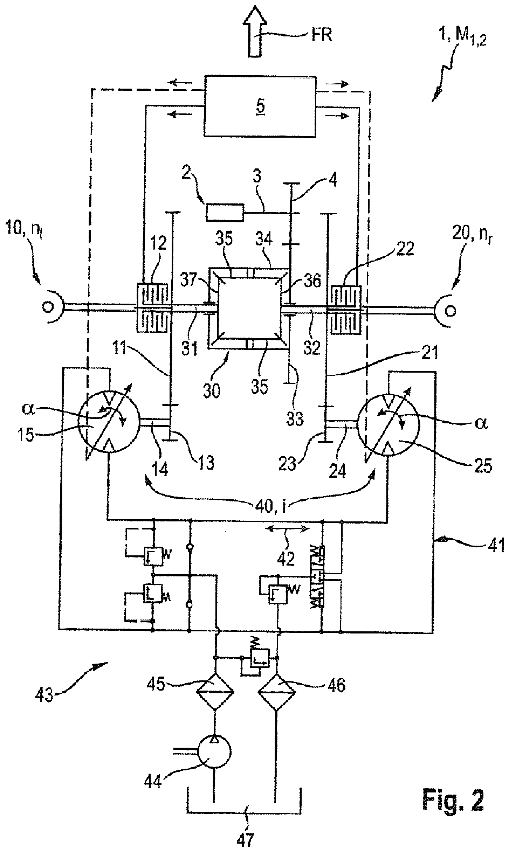

Fig. 2 zeigt eine Prinzipskizze eines erfindungsgemäßen lenkbaren Raupenfahrwerks 1. Das gezeigte Raupenfahrwerk 1 lässt sich vorteilhaft zum Antrieb eines landwirtschaftlichen Nutzfahrzeugs, wie beispielsweise eines in Fig. 1 gezeigten Mähdreschers 50 einsetzen.

Das Raupenfahrwerk 1 umfasst gemäß der Darstellung von Fig. 2 als wesentliche Elemente ein linkes Raupenschiff 10, ein rechtes Raupenschiff 20, ein Differentialgetriebe 30 und ein damit koppelbares bzw. davon entkoppelbares hydraulisches Getriebe 40. Eine bevorzugte Fahrtrichtung FR des Raupenfahrwerks 1 ist durch den Pfeil FR angedeutet.

Bei dem Differentialgetriebe 30 handelt es sich um ein für sich bekanntes Differentialgetriebe, das über einen Antriebsmotor 2 antreibbar ist. Eine vom Antriebsmotor 2 antreibbare Antriebswelle 3 steht über eine Stirnradstufe, umfassend ein Stirnrad 4 und ein damit kämmendes Stirnrad 33, mit einem Differentialkorb 34 des Differentialgetriebes 30 in Antriebsverbindung. Der Differentialkorb 34 nimmt mehrere Kegelzahnräder 35 drehbar auf. Jedes der Kegelzahnräder 35 steht in kämmendem Eingriff mit zwei sich gegenüberliegenden Kegelzahnrädern 36, 37. Dabei ist das Kegelzahnrad 37 einem ersten Getriebeausgang 31 zum Antrieb des linken Raupenschiffs 10 und das Kegelzahnrad 36 einem zweiten Getriebeausgang 32 zum Antrieb des rechten Raupenschiffs 20 zugeordnet. Auf für sich bekannte Weise teilt das Differentialgetriebe 30 die über die Antriebswelle 3 eingehende Antriebsleistung auf die Getriebeausgänge 31, 32 auf.

Dem ersten Getriebeausgang 31 ist ein Stirnrad 11 zugeordnet, das mit einem weiteren Stirnrad 13 kämmt, um über eine Welle 14 eine Antriebsverbindung zu einer hydrostatischen Einheit 15 herzustellen. Die hydrostatische Einheit 15 weist ein veränderliches Schluck- bzw. Fördervolumen auf (Schwenkwinkel a).

Dem zweiten Getriebeausgang 32 ist ein Stirnrad 21 zugeordnet, das mit einem weiteren Stirnrad 23 kämmt, um über eine Welle 24 eine Antriebsverbindung zu einer hydrostatischen Einheit 25 herzustellen. Auch die hydrostatische Einheit 25 weist ein veränderliches Schluck- bzw. Fördervolumen auf (Schwenkwinkel a). Die Schwenkwinkel a der hydrostatischen Einheiten 15, 25 sind dabei getrennt regelbar.

Die beiden hydrostatischen Einheiten 15, 25 sind über einen geschlossenen hydraulischen Kreislauf 41 (Hydraulikmedium 42) antriebsmäßig miteinander verbunden, um ein hydraulisches Getriebe 40 zu bilden. Somit sind auf für sich bekannte Weise die Getriebeausgänge 31, 32 des Differentialgetriebes 30 über das hydraulische Getriebe 40 gekoppelt. In Abhängigkeit der gewählten Schwenkwinkel α der hydrostatischen Einheiten 15, 25 ergibt sich zwischen den Getriebeausgängen 31, 32 ein veränderliches Übersetzungsverhältnis i.

Der geschlossene hydraulische Kreislauf 41 wird auf für sich bekannte Weise über einen Speisekreis 43 mit einem Hydraulikmedium 42 versorgt. Der Speisekreis umfasst eine Hydraulikpumpe 44, die als externe Druckquelle dient, einen Tank 47, einen Ölkühler 46 sowie einen Ölfilter 45.

Erfindungsgemäß verfügt das gezeigte Raupenfahrwerk 1 über Mittel, mit denen sich die Getriebeausgänge 31, 32 von dem hydraulischen Getriebe 40 entkoppeln lassen, beispielsweise in Form von Kupplungen.

Dazu ist zwischen dem ersten Getriebeausgang 31 und der hydrostatischen Einheit 15 eine erste Kupplung 12 und zwischen dem zweiten Getriebeausgang 32 und der hydrostatischen Einheit 25 eine zweite Kupplung 22 angeordnet. Die Kupplungen 12, 22 sind jeweils als Reibkupplungen ausgeführt, mit denen sich das jeweils zugeordnete Stirnrad 11, 21 wahlweise drehfest mit dem jeweiligen Getriebeausgang 31, 32 verbinden oder davon lösen lässt.

Eine zentrale Steuereinrichtung 5 steht mit beiden Kupplungen 11, 21 in Signalverbindung und ist betreibbar, die Getriebeausgänge 31, 32 vom hydraulischen Getriebe 40 in Abhängigkeit eines Betriebsparameters, insbesondere der Fahrgeschwindigkeit des Raupenfahrwerks 1, einer Drehzahl des Getriebeeingangs 34, einer Drehzahl nₗ, nᵣ eines Getriebeausgangs 31, 32, einer Drehzahl einer hydrostatischen Einheit 15, 25 und/oder dergleichen, zu entkoppeln. Bevorzugt erfolgt diese Entkopplung durch entsprechende Ansteuerung jeweils gemeinsam.

Mit Hilfe der Steuereinrichtung 5 lässt sich das Raupenfahrwerk in zwei Betriebsmodi M₁, M₂ betreiben. Dabei sind in einem gekoppelten Betriebsmodus M₁ die Getriebeausgänge 31, 32 des Differentialgetriebes 30 über das hydraulische Getriebe 40 aneinander gekoppelt, so dass sich das Raupenfahrwerk 1 durch Verändern der Übersetzung i des hydraulischen Getriebes 40 und eine damit einhergehende Änderung des Verhältnisses der Antriebsdrehzahlen nₗ ,nᵣ der Raupenschiffe 10, 20 lenken lässt, in einem entkoppelten Betriebsmodus M₂ die Getriebeausgänge 31, 32 des Differentialgetriebes 30 vom hydraulischen Getriebe 40 entkoppelt, so dass sich in einem erzwungenen Fahrzustand des Raupenfahrwerks, insbesondere bei erzwungener Kurvenfahrt, das Verhältnis der Drehzahlen n₁, n₂ der Getriebeausgänge 31, 32 an diesen Fahrzustand anpassen kann.

Die Steuereinrichtung 5 ist dabei betreibbar, den Betriebsmodus M_{1,2} des Raupenfahrwerks 1 in Abhängigkeit eines oder mehrerer Betriebsparameter auszuwählen, insbesondere in Abhängigkeit der Fahrgeschwindigkeit des Raupenfahrwerks 1, einer Drehzahl des Getriebeeingangs 34, einer Drehzahl nₗ, nᵣ eines Getriebeausgangs 31, 32, einer Drehzahl einer hydrostatischen Einheit 15, 25 und/oder dergleichen. Für unterhalb eines vorgebbaren Wertes liegende Fahrgeschwindigkeiten und/oder Drehzahlen nₗ, nᵣ wählt die Steuereinrichtung 5 den gekoppelten Betriebsmodus M₁ aus. Für oberhalb des vorgebbaren Wertes liegende Fahrgeschwindigkeiten und/oder Drehzahlen nₗ, nᵣ wählt die Steuereinrichtung 5 den entkoppelten Betriebsmodus M₂ aus.

In Fig. 1 ist beispielhaft ein landwirtschaftliches Nutzfahrzeug in Form eines Mähdreschers 50 in Halbraupenbauweise gezeigt. Der Mähdrescher 50 verfügt über einen Hauptantriebsmotor 51, unter anderem zum Antrieb des Antriebsmotors 2, sowie über eine Fahrzeugstruktur 52, die sich mittels eines wie anhand von Fig. 2 zuvor beschriebenen Raupenfahrwerks 1 und mittels einer weiteren Achse 53 gegenüber dem Boden abstützt. Die weitere Achse 53 ist lenkbar ausgeführt, so dass sich der Mähdrescher 50 zumindest im entkoppelten Betriebsmodus M₂ des Raupenfahrwerks 1 über die weitere Achse 53 lenken lässt.

Der Mähdrescher 50 mit dem erfindungsgemäß ausgebildetem Raupenfahrwerk 1 bietet den Vorteil, dass das Raupenfahrwerk 1 bei verhältnismäßig geringen Fahrgeschwindigkeiten mit Hilfe der hydraulischen Überlagerungslenkung durch das gekoppelte hydraulische Getriebe 40 gelenkt werden kann. Es treten beim Lenken weder Bremsverschleiß noch damit verbundene Verlustleistungen auf. Zudem wird eine besonders feinfühlige Lenkbarkeit erreicht.

Bei höheren Fahrgeschwindigkeiten bietet das an dem Mähdrescher 50 vorhandene Raupenfahrwerk 1 den Vorteil, dass die Getriebeausgänge 31, 32 vom hydraulischen Getriebe 40 entkoppelt sind und daher die hydrostatischen Einheiten 15, 25 nicht mit zu hoher Drehzahl betrieben werden müssen. Entsprechend ist eine kompakte Bauform möglich. Zur Gewährleistung der Lenkbarkeit des Mähdreschers 50 bei entkoppeltem hydraulischen Getriebe 40 dient in diesem Fall ausschließlich die lenkbare Hinterachse 53.

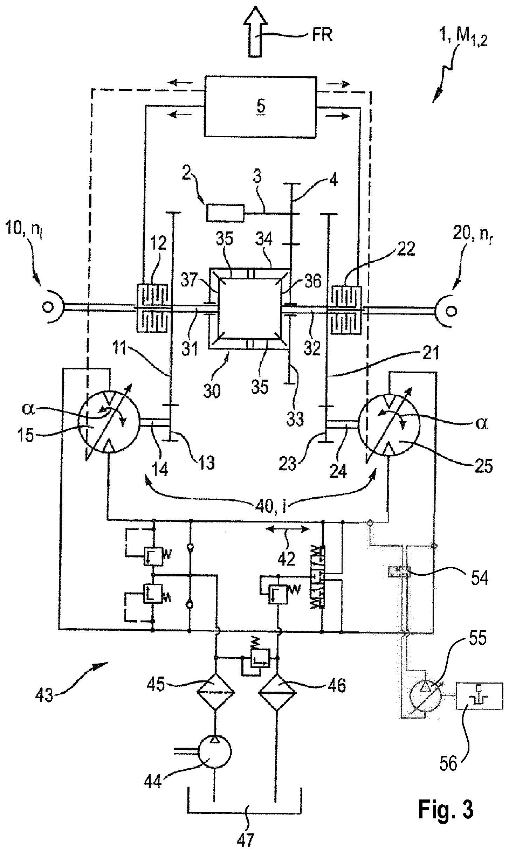

In Fig. 3 ist eine Prinzipskizze eines lenkbaren Raupenfahrwerks 1 gezeigt, dessen hydraulischer Kreislauf 41 über ein Steuerventil 54 mit einer Hydraulikpumpe 55 verbindbar ist. Die Hydraulikpumpe 55 wird dabei über einem Motor 56, beispielsweise den Antriebsmotor eines landwirtschaftlichen Nutzfahrzeuges, angetrieben. Bei Verbindung des hydraulischen Kreislaufes 41 mit der Hydraulikpumpe 55 kann über die Hydraulikpumpe 55 Leistung bereitgestellt werden, wodurch ein Lenken im Stillstand des Nutzfahrzeuges ermöglicht und/oder bei langsamer Geschwindigkeit verbessert werden kann.

### Bezugszeichenliste

- 1: Raupenfahrwerk
- 2: Antriebsmotor
- 3: Antriebswelle
- 4: Stirnrad
- 5: Steuereinrichtung

- 10: linkes Raupenschiff
- 11: Stirnrad
- 12: Reibkupplung
- 13: Stirnrad
- 14: Welle
- 15: hydrostatische Einheit

- 20: rechtes Raupenschiff
- 21: Stirnrad
- 22: Reibkupplung
- 23: Stirnrad
- 24: Welle
- 25: hydrostatische Einheit

- 30: Differentialgetriebe
- 31: Getriebeausgang (links)
- 32: Getriebeausgang (rechts)
- 33: Stirnrad
- 34: Differentialkorb
- 35: Kegelzahnrad
- 36: Kegelzahnrad
- 37: Kegelzahnrad

- 40: hydraulisches Getriebe
- 41: geschlossener Hydraulikkreislauf
- 42: Hydraulikmedium
- 43: Speisekreis
- 44: Hydraulikpumpe
- 45: Ölfilter
- 46: Ölkühler
- 47: Tank

- 50: Mähdrescher
- 51: Hauptantriebsmotor
- 52: Fahrzeugstruktur
- 53: Hinterachse
- 54: Steuerventil

- 55: Hydraulikpumpe
- 56: Motor

- FR: Fahrtrichtung
- M₁: gekoppelter Betriebsmodus
- M₂: entkoppelter Betriebsmodus
- nₗ: Drehzahl (linker Abtrieb)
- nᵣ: Drehzahl (rechter Abtrieb)
- α: Schwenkwinkel

## Patentansprüche

1. Lenkbares Raupenfahrwerk (1) für ein landwirtschaftliches Nutzfahrzeug wie insbesondere einen Traktor oder eine selbstfahrende Erntemaschine, umfassend:
ein linksseitiges Raupenschiff (10), ein rechtsseitiges Raupenschiff (20),
ein Differentialgetriebe (30) mit
einem motorisch antreibbaren Getriebeeingang (34),
einem ersten Getriebeausgang (31) zum Antrieb des linken Raupenschiffs (10) und
einem zweiten Getriebeausgang (32) zum Antrieb des rechten Raupenschiffs (20), sowie
ein hydraulisches Getriebe (40) mit veränderlicher Übersetzung (i),
wobei die Getriebeausgänge (31, 32) des Differentialgetriebes (30) über das hydraulische Getriebe (40) aneinander gekoppelt sind, so dass sich durch Verändern der Übersetzung (i) des hydraulischen Getriebes (40) das Verhältnis der Drehzahlen (nₗ, nᵣ) der Getriebeausgänge (31, 32) beeinflussen lässt,
**gekennzeichnet durch** Mittel zum Entkoppeln der Getriebeausgänge (31, 32) von dem hydraulischen Getriebe (40).

2. Raupenfahrwerk nach Anspruch 1, **dadurch gekennzeichnet, dass** zwischen dem ersten Getriebeausgang (31) und einem ersten Glied (15) des hydraulischen Getriebes (40) eine erste Kupplung (12), und dass zwischen dem zweiten Getriebeausgang (32) und einem zweiten Glied (25) des hydraulischen Getriebes (40) eine zweite Kupplung (22) angeordnet ist.

3. Raupenfahrwerk nach Anspruch 2, **dadurch gekennzeichnet, dass** die Kupplungen (12, 22) jeweils als Reibkupplung ausgeführt sind.

4. Raupenfahrwerk nach einem der vorigen Ansprüche, **dadurch gekennzeichnet, dass** das hydraulische Getriebe (40) eine mit dem ersten Getriebeausgang (31) in Antriebsverbindung bringbare erste hydrostatische Einheit (15) und eine mit dem zweiten Getriebeausgang (32) in Antriebsverbindung bringbare zweite hydrostatische Einheit (25) umfasst, wobei die hydrostatischen Einheiten (15, 25) innerhalb eines hydraulischen Kreises (41) miteinander verbunden sind.

5. Raupenfahrwerk nach Anspruch 4, **dadurch gekennzeichnet, dass** zumindest eine, vorzugsweise beide, der hydrostatischen Einheiten (15, 25) ein veränderliches Schluck- bzw. Fördervolumen aufweisen.

6. Raupenfahrwerk nach Anspruch 5 oder 6, **dadurch gekennzeichnet, dass** die hydrostatischen Einheiten (15, 25) jeweils über eine Stirnradstufe (11, 13; 21, 23) mit dem zugehörigen Getriebeausgang (31; 32) in Antriebsverbindung bringbar sind.

7. Raupenfahrwerk nach Anspruch 6, **dadurch gekennzeichnet, dass** eine Stirnradstufe (11, 13; 21, 23) jeweils ein der hydrostatischen Einheit (15; 25) zugeordnetes Stirnrad (13; 23) und ein damit kämmendes, dem Getriebeausgang (31; 32) zugeordnetes Stirnrad (11; 21) umfasst.

8. Raupenfahrwerk nach Anspruch 7, **dadurch gekennzeichnet, dass** dem Stirnrad (11; 21), das dem Getriebeausgang (31; 32) zugeordnet ist, jeweils eine Kupplung (12; 22) zugeordnet ist, mit der sich zwischen jeweiligem Stirnrad (11; 21) und Getriebeausgang (31; 32) eine Antriebsverbindung lösen oder herstellen lässt.

9. Raupenfahrwerk nach einem der vorigen Ansprüche, **gekennzeichnet durch** eine Steuereinrichtung (5), die betreibbar ist, die Getriebeausgänge (31, 32) vom hydraulischen Getriebe (40) in Abhängigkeit eines Betriebsparameters, insbesondere der Fahrgeschwindigkeit des Raupenfahrwerks (1), einer Drehzahl des Getriebeeingangs (34), einer Drehzahl (nₗ, nᵣ) eines Getriebeausgangs (31, 32), einer Drehzahl einer hydrostatischen Einheit (15, 25) und/oder dergleichen, zu entkoppeln.

10. Raupenfahrwerk nach zumindest Anspruch 9, **dadurch gekennzeichnet, dass** die Steuereinrichtung (5) betreibbar ist, die Kupplungen (12, 22) durch entsprechende Ansteuerung gemeinsam zu betätigen.

11. Raupenfahrwerk nach einem der vorigen Ansprüche, **dadurch gekennzeichnet, dass** sich dieses in zwei Betriebsmodi (M₁, M₂) betreiben lässt, wobei
in einem gekoppelten Betriebsmodus (M₁) die Getriebeausgänge (31, 32) des Differentialgetriebes (30) über das hydraulische Getriebe (40) aneinander gekoppelt sind, so dass sich das Raupenfahrwerk (1) durch Verändern der Übersetzung (i) des hydraulischen Getriebes (40) und eine damit einhergehende Änderung des Verhältnisses der Antriebsdrehzahlen (nₗ, nᵣ) der Raupenschiffe (10, 20) lenken lässt, und wobei
in einem entkoppelten Betriebsmodus (M₂) die Getriebeausgänge (31, 32) des Differentialgetriebes (30) vom hydraulischen Getriebe (40) entkoppelt sind, so dass sich in einem erzwungenen Fahrzustand des Raupenfahrwerks, insbesondere bei erzwungener Kurvenfahrt, das Verhältnis der Drehzahlen (n₁, n₂) der Getriebeausgänge (31, 32) an diesen Fahrzustand anpassen kann.

12. Raupenfahrwerk nach Anspruch 11, **dadurch gekennzeichnet, dass** die Steuereinrichtung (5) betreibbar ist, den Betriebsmodus (M) des Raupenfahrwerks (1) in Abhängigkeit eines oder mehrerer Betriebsparameter auszuwählen, insbesondere in Abhängigkeit der Fahrgeschwindigkeit des Raupenfahrwerks (1), einer Drehzahl des Getriebeeingangs (34), einer Drehzahl (nₗ, nᵣ) eines Getriebeausgangs (31, 32), einer Drehzahl einer hydrostatischen Einheit (15, 25) oder dergleichen.

13. Raupenfahrwerk nach Anspruch 11 oder 12, **dadurch gekennzeichnet, dass** für unterhalb eines vorgebbaren Wertes liegende Fahrgeschwindigkeiten und/oder Drehzahlen (nₗ, nᵣ) der gekoppelte Betriebsmodus (M₁) ausgewählt wird und dass für oberhalb des vorgebbaren Wertes liegende Fahrgeschwindigkeiten und/oder Drehzahlen (nₗ, nᵣ) der entkoppelte Betriebsmodus (M₂) ausgewählt wird.

14. Raupenfahrwerk nach einem der vorherigen Ansprüche, **dadurch gekennzeichnet, dass** der hydraulische Kreis (41) mit einer, insbesondere antriebsmotorgetriebenen, Hydraulikpumpe (55) verbindbar ist.

15. Landwirtschaftliches Nutzfahrzeug (50), insbesondere Traktor oder selbstfahrende Erntemaschine in Halbraupenbauweise, mit einer Fahrzeugstruktur (52), die sich mittels eines Raupenfahrwerks (1) gemäß einem der vorigen Ansprüche und mittels einer weiteren Achse (53) gegenüber dem Boden abstützt, wobei die weitere Achse (53) lenkbar ausgeführt ist, so dass sich das Nutzfahrzeug (50) zumindest im entkoppelten Betriebsmodus (M₂) des Raupenfahrwerks (1) über die weitere Achse (53) lenken lässt.

## Claims

1. A steerable track-laying chassis (1) for an agricultural utility vehicle like in particular a tractor or a self-propelled harvester, including:
a left-side track-laying assembly (10) and a right-side track-laying assembly (20)
a differential transmission (30) comprising
an engine-drivable transmission input (34),
a first transmission output (31) for driving the left-side track-laying assembly (10), and
a second transmission output (32) for driving the right-side track-laying assembly (20), and
a hydraulic transmission (40) with a variable transmission ratio (i), wherein the transmission outputs (31, 32) of the differential transmission (30) are coupled to each other by way of the hydraulic transmission (40) so that the ratio of the rotary speeds (nₗ, nᵣ) of the transmission outputs (31, 32) can be influenced by varying the transmission ratio (i) of the hydraulic transmission (40),
**characterised by** means for uncoupling the transmission outputs (31, 32) from the hydraulic transmission (40).

2. A track-laying chassis according to claim 1 **characterised in that** arranged between the first transmission output (31) and a first member (15) of the hydraulic transmission (40) is a first coupling (12) and arranged between the second transmission output (32) and a second member (25) of the hydraulic transmission (40) is a second coupling (22).

3. A track-laying chassis according to claim 2 **characterised in that** the couplings (12, 22) are respectively in the form of a friction clutch.

4. A track-laying chassis according to one of the preceding claims **characterised in that** the hydraulic transmission (40) includes a first hydrostatic unit (15) which can be brought into driving relationship with the first transmission output (31) and a second hydrostatic unit (25) which can be brought into driving relationship with the second transmission output (32), wherein the hydrostatic units (15, 25) are connected together within a hydraulic circuit (41).

5. A track-laying chassis according to claim 4 **characterised in that** at least one and preferably both of the hydrostatic units (15, 25) have a variable intake or delivery volume.

6. A track-laying chassis according to claim 5 or claim 6 **characterised in that** the hydrostatic units (15, 25) can be respectively brought into driving relationship with the associated transmission output (31; 32) by way of a spur gear stage (11, 13; 21, 23).

7. A track-laying chassis according to claim 6 **characterised in that** a spur gear stage (11, 13; 21, 23) respectively includes a spur gear (13; 23) associated with the hydrostatic unit (15; 25) and a spur gear (11, 21) which meshes therewith and which is associated with the transmission output (31; 32).

8. A track-laying chassis according to claim 7 **characterised in that** associated with the spur gear (11; 21) which is associated with the transmission output (31; 32) is a respective coupling (12; 22) with which a driving relationship can be made or interrupted between the respective spur gear (11; 21) and the transmission output (31; 32).

9. A track-laying chassis according to one of the preceding claims **characterised by** a control device (5) which is operable to uncouple the transmission outputs (31, 32) from the hydraulic transmission (40) in dependence on an operating parameter, in particular the travel speed of the track-laying chassis (1), a rotary speed of the transmission input (34), a rotary speed (nₗ, nᵣ) of a transmission output (31, 32), a rotary speed of a hydrostatic unit (15, 25) and/or the like.

10. A track-laying chassis according to at least claim 9 **characterised in that** the control device (5) is operable to jointly actuate the couplings (12, 22) by suitable actuation control.

11. A track-laying chassis according to one of the preceding claims **characterised in that** it can be operated in two operating modes (M₁, M₂), wherein
in a coupled operating mode (M₁) the transmission outputs (31, 32) of the differential transmission (30) are coupled to each other by way of the hydraulic transmission (40) so that the track-laying chassis (1) can be steered by varying the transmission ratio (i) of the hydraulic transmission (40) and a change linked thereto in the ratio of the drive speeds (nₗ, nᵣ) of the track-laying assemblies (10, 20), and wherein
in an uncoupled operating mode (M₂) the transmission outputs (31, 32) of the differential transmission (30) are uncoupled from the hydraulic transmission (40) so that in a forced travel state of the track-laying chassis, in particular in forced bend negotiation, the ratio of the rotary speeds (n₁, n₂) of the transmission outputs (31, 32) can adapt to that travel condition.

12. A track-laying chassis according to claim 11 **characterised in that** the control device (5) is operable to select the operating mode (M) of the track-laying chassis (1) in dependence on one or more operating parameters, in particular in dependence on the travel speed of the track-laying chassis (1), a rotary speed of the transmission input (34), a rotary speed (nₗ, nᵣ) of a transmission output (31, 32), a rotary speed of a hydrostatic unit (15, 25) or the like.

13. A track-laying chassis according to claim 11 or claim 12 **characterised in that** for travel speeds and/or rotary speeds (nₗ, nᵣ) below a predeterminable value the coupled operating mode (M₁) is selected and for travel speeds and/or rotary speeds (nₗ, nᵣ) above the predeterminable value the uncoupled operating mode (M₂) is selected.

14. A track-laying chassis according to one of the preceding claims **characterised in that** the hydraulic circuit (41) can be connected to an in particular drive engine-driven hydraulic pump (55).

15. An agricultural utility vehicle (50), in particular a tractor or self-propelled harvester of a half-track design, comprising a vehicle structure (52) which is supported in relation to the ground by means of a track-laying chassis (1) according to one of the preceding claims and by means of a further axle (53), wherein the further axle (53) is steerable so that the utility vehicle (50) can be steered by way of the further axle (53) at least in the uncoupled operating mode (M₂) of the track-laying chassis (1).

## Revendications

1. Train de roulement chenillé dirigeable (1) pour un véhicule utilitaire agricole comme en particulier un tracteur ou une machine de récolte automotrice, comprenant :
un ensemble de chenille gauche (10), un ensemble de chenille droit (20), un engrenage différentiel (30) avec
une entrée d'engrenage à entraînement motorisé (34),
une première sortie d'engrenage (31) pour l'entraînement de l'ensemble de chenille gauche (10) et
une seconde sortie d'engrenage (32) pour l'entraînement de l'ensemble de chenille droit (20) ainsi que
un engrenage hydraulique (40) à multiplication variable (i),
les sorties d'engrenage (31, 32) de l'engrenage différentiel (30) étant couplées l'une à l'autre par l'intermédiaire de l'engrenage hydraulique (40), de sorte que le rapport des vitesses de rotation (nₗ, nᵣ) des sorties d'engrenage (31, 32) peut être influencé par la variation de la multiplication (i) de l'engrenage hydraulique (40),
**caractérisé par** des moyens pour découpler les sorties d'engrenage (31, 32) de l'engrenage hydraulique (40).

2. Train de roulement chenillé selon la revendication 1, **caractérisé en ce qu'**entre la première sortie d'engrenage (31) et un premier organe (15) de l'engrenage hydraulique (40) est disposé un premier accouplement (12), et **en ce qu'**entre la seconde sortie d'engrenage (32) et un second organe (25) de l'engrenage hydraulique (40) est disposé un deuxième accouplement (22).

3. Train de roulement chenillé selon la revendication 2, **caractérisé en ce que** les accouplements (12, 22) sont chacun conformés en accouplement à friction.

4. Train de roulement chenillé selon une des revendications précédentes, **caractérisé en ce que** l'engrenage hydraulique (40) comprend une première unité hydrostatique (15), pouvant être amenée en liaison d'entraînement avec la première sortie d'engrenage (31), et une seconde unité hydrostatique (25), pouvant être amenée en liaison d'entraînement avec la seconde sortie d'engrenage (32), les unités hydrostatiques (15, 25) étant reliées entre elles à l'intérieur d'un circuit hydraulique (41).

5. Train de roulement chenillé selon la revendication 4, **caractérisé en ce qu'**au moins une, de préférence les deux, des unités hydrostatiques (15, 25) présentent un volume d'absorption, respectivement de refoulement variable.

6. Train de roulement chenillé selon la revendication 5 ou 6, **caractérisé en ce que** les unités hydrostatiques (15, 25) peuvent chacune être amenées en liaison d'entraînement avec la sortie d'engrenage correspondante (31; 32) par l'intermédiaire d'un étage de roues droites (11, 13 ; 21, 23).

7. Train de roulement chenillé selon la revendication 6, **caractérisé en ce qu'**un étage de roues droites (11, 13 ; 21, 23) comprend respectivement une roue droite (13 ; 23) associée à l'unité hydrostatique (15 ; 25) et une roue droite (11 ; 21) qui s'engrène avec celle-ci et est associée à la sortie d'engrenage (31; 32).

8. Train de roulement chenillé selon la revendication 7, **caractérisé en ce qu'**à la roue droite (11 ; 21) associée à la sortie d'engrenage (31 ; 32) est associé respectivement un accouplement (12 ; 22) avec lequel peut être annulée ou établie une liaison d'entraînement entre la roue droite respective (11 ; 21) et la sortie d'engrenage (31 ; 32).

9. Train de roulement chenillé selon une des revendications précédentes, **caractérisé par** un équipement de commande (5) qui peut être utilisé pour découpler les sorties d'engrenage (31, 32) de l'engrenage hydraulique (40) en fonction d'un paramètre d'exploitation, en particulier de la vitesse de marche du train de roulement chenillé (1), d'une vitesse de rotation de l'entrée d'engrenage (34), d'une vitesse de rotation (nₗ, nᵣ) d'une sortie d'engrenage (31, 32), d'une vitesse de rotation d'une unité hydrostatique (15, 25) et/ou analogues.

10. Train de roulement chenillé selon au moins la revendication 9, **caractérisé en ce que** l'équipement de commande (5) peut être utilisé pour actionner les accouplements (12, 22) ensemble par l'intermédiaire d'un moyen de commande correspondant.

11. Train de roulement chenillé selon une des revendications précédentes, **caractérisé en ce qu'**il peut être utilisé dans deux modes de fonctionnement (M1, M2),
dans un mode de fonctionnement couplé (M1), les sorties d'engrenage (31, 32) de l'engrenage différentiel (30) étant couplées l'une à l'autre par l'intermédiaire de l'engrenage hydraulique (40), de sorte que le train de roulement chenillé (1) peut être dirigé moyennant une variation de la multiplication (i) de l'engrenage hydraulique (40) et moyennant une variation concomitante du rapport des vitesses de rotation d'entraînement (nₗ, nᵣ) des ensembles de chenilles (10, 20) et,
dans un mode de fonctionnement découplé (M2), les sorties d'engrenage (31, 32) de l'engrenage différentiel (30) sont découplées de l'engrenage hydraulique (40), de sorte que, dans un état de marche forcée du train de roulement chenillé, en particulier en virage forcé, le rapport des vitesses de rotation (n₁, n₂) des sorties d'engrenage (31, 32) peut s'adapter à cet état de marche.

12. Train de roulement chenillé selon la revendication 11, **caractérisé en ce que** l'équipement de commande (5) peut être utilisé pour sélectionner le mode de fonctionnement (M) du train de roulement chenillé (1) en fonction d'un ou plusieurs paramètres d'exploitation, en particulier en fonction de la vitesse de marche du train de roulement chenillé (1), d'une vitesse de rotation de l'entrée d'engrenage (34), d'une vitesse de rotation (nₗ, nᵣ) d'une sortie d'engrenage (31, 32), d'une vitesse de rotation d'une unité hydrostatique (15, 25) et/ou analogues.

13. Train de roulement chenillé selon la revendication 11 ou 12, **caractérisé en ce que**, en présence de vitesses de marche et/ou de vitesses de rotation (nₗ, nᵣ) situées en dessous d'une valeur prescriptible, le mode de fonctionnement couplé (M1) est choisi, et **en ce que**, en présence de vitesses de marche et/ou de vitesses de rotation (nₗ, nᵣ) situées au-dessus d'une valeur prescriptible, le mode de fonctionnement découplé (M2) est sélectionné.

14. Train de roulement chenillé selon une des revendications précédentes, **caractérisé en ce que** le circuit hydraulique (41) peut être relié à une pompe hydraulique (55), en particulier à entraînement motorisé.

15. Véhicule utilitaire agricole (50), en particulier tracteur ou machine de récolte automotrice en version semi-chenillée, comprenant une structure de véhicule (52) qui prend appui par rapport au sol au moyen d'un train de roulement chenillé (1) selon une des revendications précédentes et au moyen d'un autre essieu (53), l'autre essieu (53) étant conçu de manière dirigeable, de sorte que, au moins en mode de fonctionnement découplé (M2) du train de roulement chenillé (1) , le véhicule utilitaire (50) peut être dirigé par l'intermédiaire de l'autre essieu (53).
